Europäisches Patentamt

European Patent Office

Office européen des brevets

(11) Veröffentlichungsnummer: **0 445 427 A2**

# (12) EUROPÄISCHE PATENTANMELDUNG

(21) Anmeldenummer: 90125382.3

(22) Anmeldetag: 22.12.90

(51) Int. Cl.⁵: C03C 17/34, B60J 7/043

(30) Priorität: 03.03.90 DE 4006756

(43) Veröffentlichungstag der Anmeldung:
11.09.91 Patentblatt 91/37

(84) Benannte Vertragsstaaten:
DE ES FR GB IT NL SE

(71) Anmelder: **Webasto AG Fahrzeugtechnik**
**Kraillingerstrasse 5**
**W-8035 Stockdorf(DE)**

(72) Erfinder: **Jardin, Hans**
**Moosstrasse 25a**
**W-8084 Inning(DE)**
Erfinder: **Lutz, Alfons**
**Nordendstrasse 68**
**W-8080 Emmering(DE)**

(54) **Lichtdurchlässige Scheibe für Kraftfahrzeuge.**

(57) Lichtdurchlässige Scheibe für Fahrzeuge, insbesondere Glasdeckel für Schiebedächer, Hebedächer und dergleichen mit einer Glasaußenschicht und einer an der Innenseite der Glasaußenschicht flächig anliegenden lichtdurchlässigen Solarzellenschicht. Die Solarzellenschicht ist auf einer Trägerschicht ausgebildet, welche an der von der Energieeinstrahlung abgewandten Seite der Glasaußenschicht angeordnet ist. Die Trägerschicht der Solarzellenschicht und/oder die Kontaktflächen der Solarzellenschicht, welche an der von der Energieeinstrahlung abgewandten Seite der Solarzellenschicht liegen, sind als den Einfall von Strahlungsenergie in den Fahrzeuginnenraum begrenzende Energietransmissions-Schutzschicht ausgebildet

FIG. 1

Die Erfindung bezieht sich auf eine lichtdurchlässige Scheibe für Fahrzeuge, insbesondere Glasdeckel für Schiebedächer, Hebedächer und dergleichen, mit einer Glasaußenschicht und einer an der Innenseite der Glasaußenschicht flächig anliegenden lichtdurchlässigen Solarzellenschicht, die auf einer Trägerschicht ausgebildet ist, welche an der von der Energieeinstrahlung abgewandten Seite der Glasaußenschicht angeordnet ist und sich zusammen mit der Solarzellenschicht über die volle Fläche oder mindestens den größeren Teil der Fläche der Scheibe erstreckt.

Eine solche Scheibe ist aus dem Aufsatz "Photovoltaic hot air purge systems" von P. Aschenbrenner, Sonderdruck aus Automotive Technology International, 1989, bekannt. Dabei ist die Solarzellenschicht als Überzug auf eine Glasträgerschicht aufgebracht oder zwischen zwei Glasschichten eingeschlossen. Es ist ferner darauf verwiesen, daß weitere Verbesserungen durch die kombinierte Anwendung von aktiven und passiven Glasbeschichtungen aus Solarzellen bzw. Sonnenschutzschichten zu erwarten sind. Sonnenschutzschichten in Form von Reflexionsbelägen sind u.a. aus der DE-AS 21 38 517 und dem DE-GM 77 24 409 bekannt. Es ist auch bekannt, für einen Sonnenschutz durch Einmischen von Pigmenten oder durch Aufbringen eines Siebdruckes zu sorgen (DE-GM 89 01 830 und DE-OS 19 51 616). Eine Kombination von Reflexions- und Absorptionsschicht ist in der DE-OS 20 29 181 beschrieben.

Der im Patentanspruch 1 angegebenen Erfindung liegt die Aufgabe zugrunde, eine relativ einfach und kostengünstig zu fertigende lichtdurchlässige Scheibe zu schaffen, die einfallendes Licht in elektrische Energie umwandelt und die zugleich die Energieeinstrahlung, insbesondere die Einstrahlung von Wärmeenergie, in das Fahrzeuginnere wesentlich herabsetzt.

Ausgehend von einer lichtdurchlässigen Scheibe der eingangs genannten Art wird diese Aufgabe erfindungsgemäß dadurch gelöst, daß die Trägerschicht der Solarzellenschicht und/oder die Kontaktflächen der Solarzellenschicht, welche an der von der Energieeinstrahlung abgewandten Seite der Solarzellenschicht liegen, als den Einfall von Strahlungsenergie in den Fahrzeuginnenraum begrenzende Energietransmissions-Schutzschicht ausgebildet sind.

Die Solarzellen-Trägerschicht und/oder die innenseitigen Kontaktflächen der Solarzellenschicht, die bei einer Solarzellenanordnung ohnehin erforderlich sind, erhalten damit eine Doppelfunktion. Zusätzlich zu ihrer Aufgabe, die Solarzellenschicht zu tragen bzw. als Stromsammler für den Solarzellen-Halbleiterwerkstoff zu dienen, reduzieren sie den Anteil der einfallenden Strahlung, der durch die lichtdurchlässige Scheibe hindurch in den Fahrzeuginnenraum gelangt. Mit anderen Worten, die lichtdurchlässige Scheibe nach der Erfindung erfüllt eine Sonnenschutzfunktion, ohne daß es über die für eine Solarzellenanordnung sowieso notwendigen Schichten hinausgehend noch weiterer Zusatzschichten bedarf. Die Fertigung der lichtdurchlässigen Scheibe gestaltet sich infolgedessen verhältnismäßig einfach und kostensparend.

Die Solarzellenschicht kann zweckmäßig in an sich bekannter Weise eine Schicht aus amorphem Halbleiterwerkstoff, insbesondere amorphem Silizium, aufweisen. Solche Schichten lassen sich mit verhältnismäßig geringem Aufwand auch großflächig ausbilden. Die Solarzellenschicht kann auf die als Energietransmissions-Schutzschicht ausgelegte Trägerschicht beispielsweise aufgedampft oder aufgesputtert sein, unabhängig davon, ob die Kontaktflächen der Solarzellenschicht, welche an der von der Energieeinstrahlung abgewandten Seite der Solarzellenschicht liegen, ihrerseits als Energietransmissions-Schutzschicht ausgebildet sind oder nicht.

Die Energietransmissions-Schutzschicht kann als Reflexions- und/oder Absorptionsschicht ausgebildet sein, die bevorzugt Wärmestrahlung reflektiert bzw. absorbiert. Eine Reflexionsschicht hat dabei den zusätzlichen Vorteil, daß sie einen Teil der Strahlung, welche die Halbleiterschicht der Solarzellenschicht bereits durchdrungen hat, zurück zu dieser Halbleiterschicht wirft und damit den Wirkungsgrad der Solarzellenschicht steigert.

Die Glasaußenschicht kann die allein tragende Schicht der Scheibe bilden. Die Solarzellenschicht und ihre Trägerschicht können aber auch zwischen die Glasaußenschicht und eine Glasinnenschicht eingelegt sein, die jeweils einzeln oder gemeinsam den tragenden Teil der Scheibe bilden.

Bevorzugte Ausführungsbeispiele der Erfindung sind im folgenden unter Bezugnahme auf die Zeichnungen näher erläutert. Es zeigt:

Fig. 1    einen Teilquerschnitt eines Glasdeckels für ein Fahrzeug-Schiebedach, -Hebedach oder dergleichen,

Fig. 2    einen Schnitt ähnlich Fig. 1 für eine abgewandelte Ausführungsform des Deckels und

Fig. 3    in größerem Maßstab eine aufgeschnittene perspektivische Teilansicht der Solarzellenschicht und ihrer Trägerschicht.

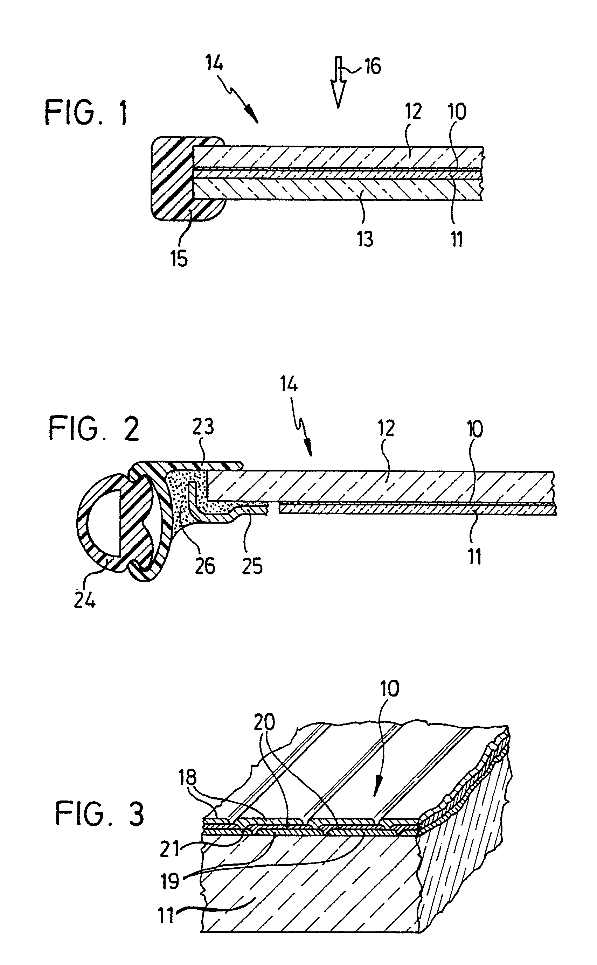

Bei der Ausführungsform nach Fig. 1 weist der Glasdeckel eines Kraftfahrzeug-Schiebedachs, -Hebedaches oder dergleichen eine bei 10 angedeutete Solarzellenschicht auf, die auf einer Trägerschicht 11 ausgebildet, beispielsweise auf die Trägerschicht 11 aufgedampft oder aufgesputtert, ist. Die aus der Solarzellenschicht 10 und der Trägerschicht 11 bestehende Einheit ist vollflächig zwischen einer Glasaußenschicht und einer Glasinnenschicht 13 angeordnet. Die Einheit 10, 11 kann zwischen die Glasschichten 12 und 13 einfach eingelegt sein; die Einheit 10, 11 kann aber auch mit der Glasaußenschicht 12 und/oder der Glasinnenschicht 13 verbunden, beispielsweise verklebt sein. Zu dem insgesamt mit 14 bezeichneten Glasdeckel gehört ferner eine sich rund um die Schichtenfolge 12, 10, 11 und 13 erstreckende Einfassung 15, bei der es sich beispielsweise um eine aufgesetzte Randdichtung oder um eine Umspritzung, beispielsweise eine Polyurethan-Umschäumung, handeln kann. Die Richtung des Einfalls von Strahlungsenergie ist durch den Pfeil 16 angedeutet.

Bei der Glasaußenschicht 12 und der Glasinnenschicht 13 kann es sich beispielsweise um Klarglas-Platten handeln, die z.B. jeweils 2 mm dick sein können. Die Glasinnenschicht 13 kann aber auch als reflektierende und/oder absorbierende Energietransmissions-Schutzschicht ausgebildet sein und für diesen Zweck beispielsweise aus entsprechend eingefärbtem Glas bestehen.

Ein vergrößerter Teilschnitt der aus der Trägerschicht 11 und der Solarzellenschicht 10 bestehenden Einheit ist in Fig. 3 veranschaulicht. Wie dort zu erkennen ist, weist die Solarzellenschicht 10 in an sich bekannter Weise (Aufsatz Peter Aschenbrenner a.a.O.) eine Folge von parallelen außennliegenden Kontaktflächen 18, eine Folge von parallelen innenliegenden Kontaktflächen 19 sowie eine Folge von parallelen Halbleiterflächen 20 auf. Die Halbleiterflächen 20 liegen zwischen den Kontaktflächen 18 und 19, wobei die Flächen 18, 19 und 20 quer zu ihrer Längserstreckung derart gegeneinander versetzt sind, daß sich die außenliegenden Kontaktflächen 18 und die innenliegenden Kontaktflächen 19 einander überlappen und in den bei 21 angedeuteten Überlappungsbereichen in gegenseitigem elektrischem Kontakt stehen. Auf diese Weise wird eine Folge von nebeneinanderliegenden, untereinander elektrisch in Reihe geschalteten Photozellen erhalten. Die Halbleiterflächen 20 können insbesondere aus amorphem Halbleiterwerkstoff bestehen. Besonders geeignet ist amorphes Silizium oder eine amorphe Legierung aus Silizium und Wasserstoff. Die Kontaktflächen 18 und 19 können aus Metall- oder Metalloxid-Filmen bestehen. Bei den Flächen 18, 19 und 20 handelt es sich um Dünnschichten, die auch in ihrer Kombination transparent (durchsichtig) sind.

Bei der Trägerschicht 11 kann es sich um eine Kunststoffolie oder eine dünne Glasschicht handeln. Die gesamte Einheit aus Trägerschicht 11 und Solarzellenschicht 10 kann z.B. eine Dicke in der Größenordnung von 1 mm haben.

Die Trägerschicht 11 ist vorzugsweise als Energietransmissions-Schutzschicht ausgebildet. Für diesen Zweck kann die Trägerschicht 11 durch Einmischen von zweckentsprechenden Pigmenten eingefärbt sein. Der Durchtritt von Strahlungsenergie durch die Trägerschicht 11 kann auch durch einen beispielsweise im Siebdruckverfahren aufgebrachten Aufdruck in gewünschter Weise vermindert sein. Stattdessen oder zusätzlich ist es möglich, für eine Teildurchlässigkeit der Trägerschicht 11 durch Aufdampfen einer dünnen Metallschicht, Metalloxidschicht oder dergleichen zu sorgen. Wenn dabei die Trägerschicht 11 als Reflexionsschicht ausgebildet wird, wird der Wirkungsgrad der Solarzellenschicht 10 aufgrund der reflektierten Strahlungsanteile verbessert. Die Trägerschicht 11 kann auch als kombinierte Reflexions- und Absorptionsschicht ausgelegt sein. Vorzugsweise ist dafür gesorgt, daß insbesondere das Eindringen von langwelliger Strahlung (Wärmestrahlung) in das Fahrzeuginnere begrenzt wird.

Zweckentsprechende Energietransmissions-Schutzschichten in Form von absorbierenden und/oder reflektierenden Schichten sind an sich bekannt (vergleiche beispielshalber DE-OS 19 51 616, DE-OS 20 29 181, DE-AS 21 38 517, DE-GM 77 24 409 und DE-GM 89 01 830) und bedürfen daher vorliegend keiner weiteren Diskussion.

Statt die Trägerschicht 11 als Energietransmissions-Schutzschicht auszubilden oder zusätzlich zu dieser Maßnahme können auch die innenliegenden Kontaktflächen 19 der Solarzellenschicht 10 als Energietransmissions-Schutzschicht aufgebaut werden. Beispielsweise können für diesen Zweck die innenliegenden Kontaktflächen 19 aus einem 20 bis 100 nm dicken Belag aus einer im Vakuum aufgedampften Aluminiumlegierung bestehen, die neben Aluminium 30 bis 50 % Chrom enthält.

Bei der in Fig. 2 veranschaulichten abgewandelten Ausführungsform eines Glasdeckels für Schiebedächer, Hebedächer und dergleichen ist die aus Solarzellenschicht 10 und Trägerschicht 11 bestehende Einheit an der Innenseite der Glasaußenschicht 12 angebracht, beispielsweise angeklebt. Eine der Glasinnenschicht 13 der Fig. 1 entsprechende Schicht ist weggelassen, d.h., die Glasaußenschicht 12 bildet die allein tragende Schicht des Glasdeckels 14. Die Glasaußenschicht 12 kann in diesem Fall beispielsweise eine etwa 3 mm dicke Glasscheibe sein. Die aus Solarzellenschicht 10 und Trägerschicht 11 bestehende Einheit erstreckt sich bis nahe zum Außenrand der Glasaußenschicht 12. Dieser Außenrand ist von einem Einfaßprofil 23 umgriffen, das eine Hohlkammerdichtung 24 trägt. Der Deckel wird von einem Deckelinnenblech 25 abgestützt, von dem in Fig. 2 nur ein äußerer Randbereich dargestellt ist. Das Deckelinnenblech 25 steht mit der Glasaußenschicht 12 und dem Einfaßprofil 23 über eine Vergußmasse 26, beispielsweise in Form eines zweckentsprechenden Klebers, in Verbindung. Im übrigen entspricht die Ausführungsform gemäß Fig. 2 nach Funktion und Aufbau derjenigen der Fign. 1 und 3.

Der vorliegend verwendete Begriff "Glas" soll sowohl anorganische Gläser als auch organische Gläser, wie Acrylglas und dergleichen, umfassen.

## Patentansprüche

1. Lichtdurchlässige Scheibe für Kraftfahrzeuge, insbesondere Glasdeckel für Schiebedächer, Hebedächer und dergleichen, mit einer Glasaußenschicht und einer an der Innenseite der Glasaußenschicht flächig anliegenden lichtdurchlässigen Solarzellenschicht, die auf einer Trägerschicht ausgebildet ist, welche an der von der Energieeinstrahlung abgewandten Seite der Glasaußenschicht angeordnet ist, **dadurch gekennzeichnet**, daß die Trägerschicht (11) der Solarzellenschicht (10) und/oder die Kontaktflächen (19) der Solarzellenschicht (10), welche an der von der Energieeinstrahlung abgewandten Seite der Solarzellenschicht liegen, als den Einfall von Strahlungsenergie in den Fahrzeuginnenraum begrenzende Energietransmissions-Schutzschicht ausgebildet sind.

2. Lichtdurchlässige Scheibe nach Anspruch 1, dadurch gekennzeichnet, daß die Solarzellenschicht (10) eine Schicht (20) aus amorphem Halbleiterwerkstoff, insbesondere amorphem Silizium, aufweist.

3. Lichtdurchlässige Scheibe nach Anspruch 1 oder 2, dadurch gekennzeichnet, daß die Solarzellenschicht (10) auf die als Transmissions-Schutzschicht ausgelegte Trägerschicht (11) aufgedampft oder aufgesputtert ist.

4. Lichtdurchlässige Scheibe nach einem der vorhergehenden Ansprüche, dadurch gekennzeichnet, daß die Energietransmissions-Schutzschicht (Trägerschicht 11 und/oder Kontaktflächen 19) als Reflexions- und/oder Absorptionsschicht ausgebildet sind, die bevorzugt Wärmestrahlung reflektiert bzw. absorbiert.

5. Lichtdurchlässige Scheibe nach einem der vorhergehenden Ansprüche, dadurch gekennzeichnet, daß die Glasaußenschicht (12) die allein tragende Schicht der Scheibe (Glasdeckel 14) bildet.

6. Lichtdurchlässige Scheibe nach einem der Ansprüche 1 bis 4, dadurch gekennzeichnet, daß die Solarzellenschicht (10) und die zugehörige Trägerschicht (11) zwischen die Glasaußenschicht (12) und eine Glasinnenschicht (13) eingelegt sind, die jeweils einzeln oder gemeinsam den tragenden Teil der Scheibe (Glasdeckel 14) bilden.

7. Lichtdurchlässige Scheibe nach Anspruch 6, dadurch gekennzeichnet, daß die Glasinnenschicht (13) gleichfalls als reflektierende und/oder absorbierende Energietransmissions-Schutzschicht ausgebildet ist.

FIG. 1

FIG. 2

FIG. 3